# FASCICULE DE BREVET EUROPEEN

(11) **EP 3 710 739 B1**
(45) Date de publication et mention de la délivrance du brevet: **27.12.2023**
(21) Numéro de dépôt: 18819191.0
(22) Date de dépôt: 15.11.2018
(51) Int. Cl.: F16L 59/12, F16B 5/06, B64D 29/08, B64C 1/40, B64C 7/02, F16L 59/02

(54) **ENSEMBLE COMPRENANT UN DISPOSITIF DE FIXATION POUR PANNEAU DE PROTECTION THERMIQUE DE NACELLE D'UN ENSEMBLE PROPULSIF D'AÉRONEF**
ANORDNUNG MIT EINER BEFESTIGUNGSVORRICHTUNG FÜR DAS HITZESCHIELD EINER GONDEL EINER ANTRIEBSBAUGRUPPE EINES FLUGZEUGS
ASSEMBLY COMPRISING A FIXING DEVICE FOR THE HEAT SHIELD PANEL OF THE NACELLE OF AN AIRCRAFT PROPULSION ASSEMBLY

(30) Priorité: 16.11.2017 FR 1760819
(43) Date de publication de la demande: 23.09.2020
(73) Titulaire: Safran Nacelles, 76700 Gonfreville-l'Orcher (FR)
(72) Inventeur: LONCLE, Alexis, 76700 Gonfreville L'Orcher (FR); RABINEAU, Jérémie, 76700 Gonfreville L'Orcher (FR); BELLET, François, 76700 Gonfreville L'Orcher (FR); RENAULT, Cédric, 76700 Gonfreville L'Orcher (FR)
(74) Mandataire: Germain Maureau
(86) Numéro de dépôt international: PCT/FR2018/052851
(87) Numéro de publication internationale: WO 2019/097169

(56) Documents cités:
- EP-A1- 0 465 983
- EP-A2- 1 296 090
- FR-A1- 3 019 599
- US-B1- 7 584 582

## Description

La présente invention se rapporte à un dispositif de fixation d'au moins un matelas de protection thermique sur une structure interne fixe d'une nacelle de turboréacteur.

Un avion est mû par un ou plusieurs ensembles propulsifs tels que des turboréacteurs logés chacun dans une nacelle.

Une nacelle présente généralement une structure sensiblement tubulaire comprenant une entrée d'air en amont du turboréacteur, une section intermédiaire destinée à entourer une soufflante du turboréacteur et une section arrière pouvant intégrer des moyens d'inversion de poussée et destinée à entourer la chambre de combustion et tout ou partie des étages de compresseur et de turbine du turboréacteur, et est généralement terminée par une tuyère d'éjection dont la sortie est située en aval du turboréacteur.

Les nacelles modernes sont généralement destinées à abriter un turboréacteur double flux apte à générer, d'une part, un flux d'air chaud (également appelé flux primaire) issu de la chambre de combustion du turboréacteur et circulant dans un espace délimité par un compartiment de forme sensiblement tubulaire appelé compartiment « core », et d'autre part, un flux d'air froid (dit flux secondaire) issu de la soufflante et circulant à l'extérieur du turboréacteur à travers un passage annulaire, également appelé veine, formé entre une structure interne définissant un carénage du turboréacteur et une paroi interne de la nacelle. Les deux flux d'air sont éjectés du turboréacteur par l'arrière de la nacelle.

Le compartiment « core » comprend une enveloppe externe servant de carter et appelée structure fixe interne (IFS : Internal fixed Structure).

Cette structure interne fixe est soumise à de fortes contraintes thermiques et il est nécessaire de la protéger à l'aide de panneaux ou matelas de protection thermique, permettant notamment d'isoler les composants de la nacelle de l'environnement moteur afin de les maintenir à des températures acceptables et ainsi prolonger leur durée de vie.

Ces protections thermiques assurent également une protection anti-feu et peuvent être utilisées dans d'autres zones de la nacelle, au niveau desquelles existe un risque d'incendie.

Afin de protéger thermiquement l'IFS, il est connu d'avoir recours à des panneaux de protection, disposés par exemple du côté compartiment « core », et comprenant au moins un matelas isolant, généralement fabriqué à partir de fibres de silice, de céramique ou d'un matériau microporeux, ledit matelas étant pris entre des feuillards généralement en inox.

Les matelas de protection thermique sont fixés à l'IFS à l'aide de systèmes de fixation qui coopèrent ponctuellement avec l'IFS sur toute la surface de protection, à la manière de rivets. Le matelas de protection thermique est également retenu à l'IFS au niveau des bords par des bandes de retenue appelées communément « retainers ».

De tels systèmes de fixation sont déjà connus et par exemple, dévoilé dans les documents FR3019599, US7584582B1 ou EP1296090A2.

Il est par exemple connu d'utiliser un système de fil frein comprenant généralement deux parties : une embase fixée dans l'IFS et portant une structure d'accroche (par exemple de type crochet, passant ou pion à oeillets), et un bouton de retenue.

La structure d'accroche vient au moins partiellement à l'intérieur d'un orifice de fixation correspondant du matelas, et est apte à recevoir un lien dénommé fil frein. Le bouton de retenue vient en appui contre une surface extérieure du matelas de manière à former une rondelle de maintien et de serrage, le bouton de retenue étant pourvu d'orifices de passage du fil frein dont les extrémités sont torsadées et serrées.

La retenue du panneau sur l'IFS est ainsi assurée.

Afin de parfaire la protection, l'extrémité torsadée du fil frein est ensuite noyé dans du silicone.

En variante, le système de fil frein peut être remplacé par une structure d'accroche filetée ou taraudée coopérant avec une extrémité complémentaire du bouton de retenue. Toutefois, de tels systèmes vissés sont lourds, ont un coût plus élevé et sont peu efficaces thermiquement.

Les systèmes d'attache par fil frein possèdent généralement l'inconvénient, en cas de rupture d'un fil frein, de devoir déposer la protection thermique, afin de pouvoir accéder à la structure d'accroche concernée et remplacer le fil frein. Le temps d'intervention est donc important pour changer un simple fil frein, et pénalisant en maintenance et en production.

En outre, l'installation des matelas thermiques, avec des systèmes d'attache par fil frein, n'est pas aisée en production : cela oblige à installer toutes les structures d'accroches et fils frein associés avant la pose des matelas thermiques, pour ensuite les récupérer en surface.

Pour pallier ces inconvénients, sont utilisés en alternative des systèmes de fixations mécaniques adhésives, par exemple par crochets et boucles souples, communément appelés « scratchs », tels que des bandes commercialisées sous la marques Velcro^{®}.

Cependant, avec l'utilisation de tels bandes, les matelas thermiques sont régulièrement détériorés en étant arrachées lors du démontage.

Le but de l'invention est de résoudre tout ou partie de ces inconvénients, notamment en proposant un système de fixation à la fois aisé à produire et à installer lors de la fabrication, comme à changer/réparer lors de la maintenance, tout en garantissant l'intégrité et la sécurité des matelas thermiques lors de ces opérations, en particulier lors des démontages.

A cet effet, l'invention se rapporte à un ensemble comprenant une structure fixe interne d'une nacelle d'un ensemble propulsif d'aéronef, au moins un dispositif de fixation amovible, et une protection thermique selon les caractéristiques techniques de la revendication 1.

Grâce à une telle configuration, un opérateur peut facilement, en exerçant une traction sur le moyen de préhension avec un effort prédéterminé, désolidariser le moyen de fixation amovible.

Ainsi, le moyen de fixation amovible est destiné à être désolidarisé de la structure fixe interne par une force de traction exercée sur le moyen de préhension.

Par ailleurs, l'utilisation d'un moyen de préhension saillant extérieuremen par rapport au matelas et lié avec le moyen de fixation amovible permet le retrait du matelas sans risque de l'arracher. En effet, l'effort de traction pour le retrait du matelas de protection thermique est alors appliqué directement sur le moyen de préhension, à savoir directement sur le dispositif de fixation, et non pas directement sur le matelas de protection thermique.

Selon une caractéristique technique particulière, le moyen de fixation comporte une première partie configurée pour être fixée à la structure fixe interne et une deuxième partie reliée au moyen de préhension, les première et deuxième parties coopérant l'une avec l'autre de façon amovible.

Cette coopération est configurée pour que l'effort de traction à exercer sur le moyen de préhension soit suffisamment faible pour qu'un opérateur puisse la défaire manuellement, mais suffisamment important pour assurer le maintien de la protection thermique, sous son propre poids notamment, contre la structure fixe interne.

Selon une configuration avantageuse, le moyen de fixation amovible est une bande adhésive auto-aggripante, de préférence un moyen de fixation mécanique par crochets et boucles souples, par exemple textiles ou métalliques, communément appelés «scratchs». Ainsi dans une telle configuration, une première partie du moyen de fixation est formée par une bande adhésive munie de crochets et la deuxième partie est formée par une bande adhésive complémentaire, munie de boucles, les première et deuxième parties coopérant l'une avec l'autre par assemblages des crochets avec les boucles.

Selon une disposition particulière, le dispositif de fixation est configuré pour être disposé entre deux matelas de protection thermiques de sorte à prendre en sandwich des bords desdits matelas thermiques ou pour traverser un orifice d'un matelas thermique de sorte à prendre en sandwich des bords de cet orifice.

Selon une caractéristique particulière, le dispositif de fixation est agencé pour assurer la fixation d'une structure intermédiaire supportant le moyen de préhension, tel un bouton muni d'un d'anneau de préhension. Ce support intermédiaire a notamment pour fonction de prendre en sandwich le ou les matelas thermique(s) avec l'IFS.

Selon une autre caractéristique technique, le dispositif de fixation comporte un insert de protection thermique complémentaire agencé pour prendre en sandwich lesdits bords, le dispositif de fixation comprenant un lien traversant l'insert, relié au moyen de fixation amovible d'un côté de la structure fixe interne, et saillant par rapport à l'insert du côté opposé, par exemple en formant une boucle de préhension formant moyen de préhension.

Dans une configuration particulière, le dispositif de fixation comprend un lien agencé pour traverser le matelas, relié au moyen de fixation amovible du côté de la structure fixe interne, et agencé pour être saillant par rapport au matelas du côté opposé, par exemple en formant une boucle de préhension formant moyen de préhension.

Dans ce cas, le lien traversant est avantageusement relié à une chape, par exemple métalique, agencée pour être solidarisée au matelas du côté de la structure fixe interne, c'est-à-dire en regard de l'IFS, le moyen de fixation amovible étant fixé (au moins en partie) sur ladite chape.

Selon une autre configuration, le moyen de fixation amovible est agencé pour se prolonger de façon continue entre deux matelas thermiques accolés de sorte à faire saillie extérieurement par rapport au matelas, le moyen de préhension étant formé par l'extrémité saillante du moyen de fixation.

Selon un autre aspect, l'invention concerne également un ensemble d'une structure fixe interne d'une nacelle d'un ensemble propulsif d'aéronef et d'une protection thermique comportant au moins un matelas de protection thermique, l'ensemble étant caractérisé en ce que la protection thermique est fixée à la structure fixe interne par au moins un dispositif de fixation comportant tout ou partie des caractéristiques précitées.

D'autres caractéristiques et avantages de la présente invention apparaîtront à la lumière de la description qui va suivre, et à l'examen des figures ci-annexées, dans lesquelles :
- la figure 1 illustre une vue en coupe longitudinale d'un ensemble propulsif d'aéronef ;
- la figure 2 illustre une vue en coupe schématique d'un dispositif de fixation d'au moins un matelas de protection thermique à une structure fixe interne d'une nacelle selon un premier mode de réalisation ;
- la figure 3 illustre une vue en coupe schématique d'un dispositif de fixation d'au moins un matelas de protection thermique à une structure fixe interne d'une nacelle selon un second mode de réalisation ;
- les figures 4A et 4B illustrent des vues en coupe schématiques d'un dispositif de fixation d'au moins un matelas de protection thermique à une structure fixe interne d'une nacelle selon un troisième mode de réalisation ;
- la figure 5 illustre une vue en coupe schématique d'un dispositif de fixation d'au moins un matelas de protection thermique à une structure fixe interne d'une nacelle selon un quatrième mode de réalisation.

Sur l'ensemble de ces figures, des références identiques ou analogues désignent des organes ou ensembles d'organes identiques ou analogues.

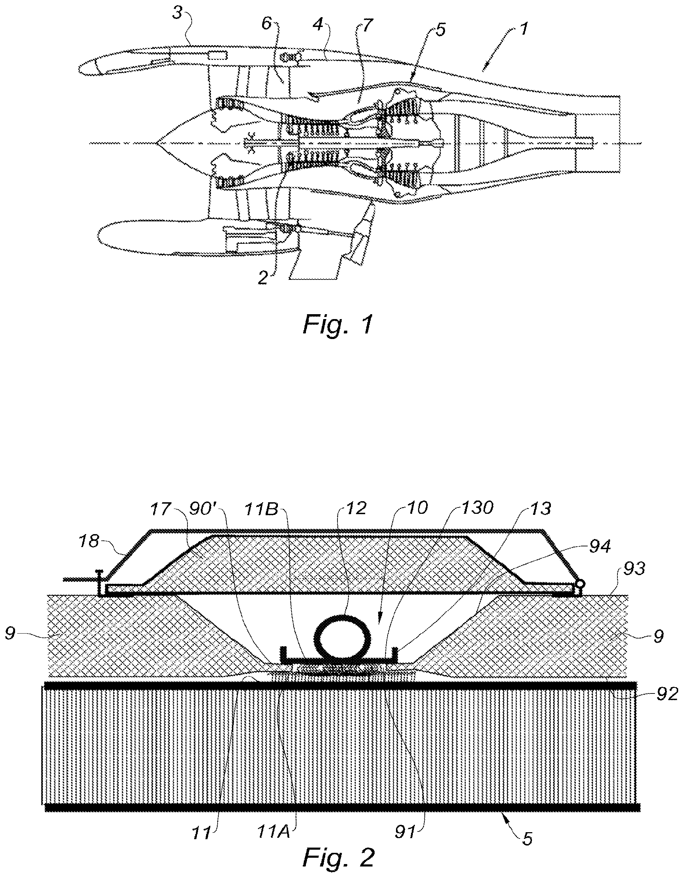

La figure 1 est une vue en coupe longitudinale d'un ensemble propulsif 1 d'aéronef, comportant un turboréacteur 2 logé dans une nacelle 3. La nacelle 3 comporte une structure fixe externe 4 (ou OFS pour « Outer Fixed Structure ») et une structure fixe interne 5 (ou IFS pour « Inner Fixed Structure »). Ces deux structures sont concentriques et définissent une veine 6 dans laquelle circule de l'air froid lorsque le turboréacteur 2 est en fonctionnement. La structure fixe interne 5 forme l'enveloppe externe du compartiment « core » 7 du turboréacteur 2.

Les figures 2 à 5 illustrents différents modes de réalisations de dispositifs de fixation 10 d'au moins un matelas de protection thermique 9 à une structure fixe interne 5 (IFS) d'une nacelle 3.

Le dispositif de fixation 10 comprenant au moins un moyen de fixation amovible 11 du matelas de protection thermique 9 à la structure fixe interne 5.

Le moyen de fixation amovilbe 11 est disposé entre ledit matelas 9 et ladite structure fixe interne 5.

Selon l'invention, le dispositif de fixation 10 comporte au moins un moyen de préhension 12 lié au moyen de fixation amovible 11 et agencé pour être saillant par rapport au matelas 9 du côté opposé à la structure fixe interne 5.

De cette manière un opérateur lors d'opération de retrait du matelas de protection thermique 9 a seulement besoin de tirer sur le moyen de préhension 12 qui exerce un effort directement sur le moyen de fixation amovible et non pas sur le matelas de protection thermique 9. Le risque d'arracher le matelas de protection thermique 9 est donc supprimé.

De préférence, le moyen de fixation amovible 11 est une bande adhésive auto-aggripante, de préférence encore, un moyen de fixation mécanique par crochets et boucles relativement souples, par exemple textiles ou métalliques communément appelé « scratchs».

Avantageusement, ces bandes adhésives auto-agrippantes sont métalliques, permettant ainsi de résister à des hautes températures.

De manière plus générale, le moyen de fixation 11 comporte une première partie 11A configurée pour être fixée à la structure fixe interne 5, par exemple par collage grâce à l'adhésif sur la bande adhésive, et une deuxième partie 11B reliée au moyen de préhension 12, les première et deuxième parties 11A, 11B coopérant l'une avec l'autre de façon amovible.

La figure 2 illustre une vue en coupe schématique d'un dispositif de fixation 10 selon un premier mode de réalisation.

La protection thermique comporte un matelas 9 de protection thermique. Le matelas 9 comporte une face en contact avec l'IFS 5, dite face interne 92, et une face opposée, dite face externe 93. Dans l'exemple, les faces interne 92 et externe 93 du matelas 9 sont recouvertes par des tôles métalliques.

Le matelas 9 est fixé à l'IFS 5 au moyen d'une pluralité de systèmes de fixation 10.

Dans cette configuration, le dispositif de fixation 10 peut être utilisé soit pour prendre en sandwich des bords 90 desdits matelas thermiques 9, soit pour traverser au moins en partie un orifice 91 d'un matelas thermique 9 de sorte à prendre en sandwich des bords 90' de cet orifice 91, comme c'est plus précisément le cas sur cette figure. En d'autres termes, ce dispositif de fixation peut être utiliser pour fixer le matelas de protection termique 9 au niveaux de ses bords 90 ou à n'importe quel endroit de son étendue, en disposant d'un orifice 91 traversant le matelas 9 dans son épaisseur.

Le dispositif de fixation 10 comprend un moyen de fixation 11 composé :
- d'une première partie 11A sous forme d'une bande adhésive auto-agrippante collée sur la structure fixe interne 5 et présentant un tapissage de crochets ou boucles souples, par exemple textiles ou métalliques ; et
- d'une deuxième partie 11B également sous forme d'une bande adhésive auto-agrippante, complémentaire de la bande formant première partie 11A, c'est-à-dire qu'elles coopèrent l'une avec l'autre de façon amovible et présente un tapissage de boucles ou crochets, respectivement par rapport à la première partie 11A.

La deuxième partie 11B est collée sur une paroi 130 d'une structure intermédiaire 13 sur laquelle est solidarisée le moyen de préhension 12. Ledit moyen de préhension 12 est en particulier situé sur un côté extérieur de ladite paroi 130 opposée au côté intérieur sur lequel est fixé la deuxième partie 11B du moyen de fixation 11. De cette manière, le dispositif de fixation 10 assure la fixation de la structure intermédiaire supportant le moyen de préhension 12.

Le moyen de préhension 12 présente la forme d'une boucle, ici métallique, formée d'un seul tenant avec la paroi 130 contre laquelle est accolée ladite deuxième partie 11B de la bande adhésive auto-agrippante.

En position de fixation des matelas, les bords 90' de l'orifice ou ouverture 91 sont pris en sandwich tout le long de son pourtour fermé entre, d'une part la structure fixe interne 5 et, d'autre part, la structure intermédiaire 13, ceci dans l'espace délimité entre cesdits bords 90'. En d'autres termes les deux parties 11A, 11b de la bande ashésive auto-agrippante ou scratch coopèrent ensemble à travers l'orifice 91 du matelas 9.

Du côté du matelas 9 au droit de l'orifice 91 est disposé un évidement 94, ménagé dans l'épaisseur du matelas 9 et débouchant sur la face externe 93 du matelas 9. L'évidement 94 communique avec l'orifice 91 de manière à former un passage au travers du matelas 9, afin de permettre, comme expliqué ci-avant :
- la coopération des deux parties 11A, 11b de la bande ashésive auto-agrippante ou scratch à travers ledit orifice 91 et,
- concernant la structure intermédiaire 13, de permettre de la loger dans l'espace délimité par l'évidement 94, dans l'épaisseur du matelas 9.

Pour garantir une protection thermique localement au niveau de la fixation, le dispositif de fixation 10 est recouvert d'un couvercle isolant 17 pour isoler thermiquement le dispositif de fixation 10 avec le matelas 9 l'entourant. Plus précisément, ce couvercle isolant 17 recouvre de manière isolante l'évidement 94 sur la face externe 93 du matelas 9.

Ce couvercle isolant 17 est maintenu sur la face externe 93 du matelas 9 par un système d'attache tel des languettes soudées sur le matelas thermique 9. Dans une variante de réalisation, comme illustré sur la figure 2, le système d'attache comprend une broche 18 métalique en forme de « U » dont la base du « U » est fixée et articulée en liaison pivot sur la face externe 93 du matelas thermique 9 et dont les deux extrémités sont agencées pour être chacunes en prise dans des crochets solidaires de la face externe 93 du matelas thermique, situés diamétralement à l'opposé de l'articulation par rapport au couvercle isolant 17. Une telle broche 18 permet d'être amovible grâce au caractère déformable du métal formant la broche 18 métalique.

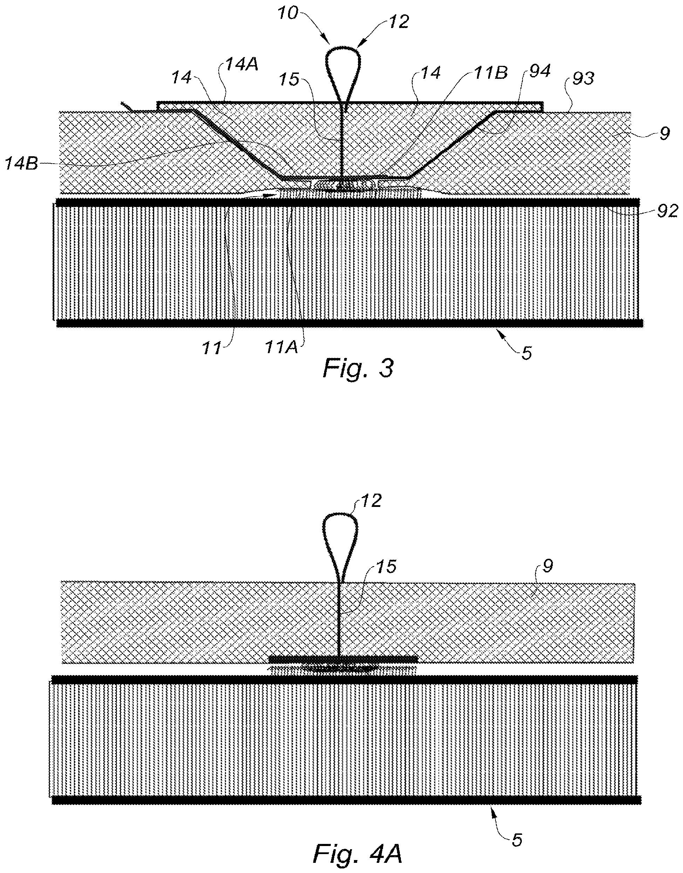

La figure 3 illustre une vue en coupe schématique d'un dispositif de fixation 10 selon un second mode de réalisation.

Dans cette configuration, le dispositif de fixation 10 peut être utilisé également soit pour prendre en sandwich des bords 90 de deux matelas thermiques 9, soit pour traverser au moins en partie un orifice 91 d'un matelas thermique 9 de sorte à prendre en sandwich des bords 90' de cet orifice 91, comme c'est plus précisément le cas sur cette figure.

Le dispositif de fixation 10 comprend, de la même façon que dans le premier mode de réalisation, un moyen de fixation 11 composé :
- d'une première partie 11A sous forme d'une bande adhésive auto-agrippante collée sur la structure fixe interne 5 et présentant un tapissage de crochets ou boucles; et
- d'une deuxième partie 11B également sous forme d'une bande adhésive auto-agrippante, complémentaire de la première partie 11A, c'est-à-dire qu'elles coopèrent l'une avec l'autre de façon amovible et présente un tapissage de boucles ou crochets, respectivement.

Ce deuxième mode de réalisation diffère principalement du premier mode de réalisation en ce que la deuxième partie 11B de la bande adhésive est collée à une structure intermédiaire 13 présentant la forme d'un insert 14 agencé pour se loger de manière sensiblement complémentaire dans l'évidement 94.

Cet insert 14 qui présente une forme complémentaire de celle de l'évidement 94, présente :
- une surface supérieure 14A dont le pourtour vient recouvrir localement la face externe 93 du matelas sur le pourtour externe dudit évidement 94 ; et
- une surface inférieure 14B, sur laquelle est collée la deuxième partie 11B de la bande adhésive, qui prend en sandwich avec l'IFS 5, les bords 90' de l'orifice 91 sur son pourtour.

Les deux parties 11A, 11b de la bande ashésive auto-agrippante ou scratch coopèrent ensemble à travers l'orifice 91 du matelas 9.

La deuxième partie 11B de la bande ashésive auto-agrippante peut être collée directement sur la surface inférieure 14B de l'insert 14 ou être, en variante, collée sur une chape 16 (non illustrée sur cette figure 3) laquelle est solidarisée par exemple à la surface inférieure 14B de l'insert 14.

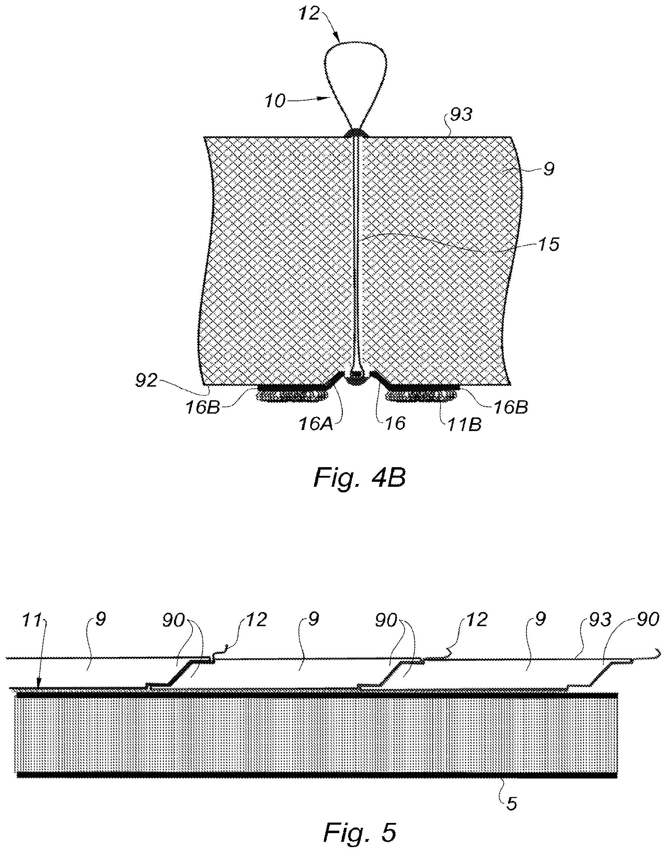

Cette chape 16 peut être similaire de celle du troisième mode de réalisation, laquelle est illustrée plus en détail sur la figure 4B.

De préférence, cet insert 14 est fabriqué dans le même matériau que celui des matelas 9, c'est-à-dire à partir de fibres de silice, de céramique ou d'un matériau microporeux, ledit matelas étant pris entre des feuillards généralement en inox.

L'insert 14 de protection thermique est agencé pour prendre en sandwich lesdits bords 90'de l'orifice 91.

Le dispositif de fixation 10 comprend un lien 15 traversant l'insert 14, relié au moyen de fixation amovible du côté de l'orifice 91 et de la structure fixe interne 5, en regard avec elle, le lien 15 étant saillant par rapport à l'insert 14 du côté opposé, c'est-à-dire saillant par rapport à la surface extérieure 14A. En particulier, la deuxième partie 11B de la bande adhésive auto-agrippante est collée directement sur la surface inférieure 14B de l'insert 14 formée à partir d'un feuillard métallique, le lien 15 étant fixée à ce feuillard de la surface inférieure 14B de l'insert 14 et traversant l'insert dans son épaisseur de sorte à être saillant à l'extérieur.

Dans ce mode de réalisation, le lien 15 est un câble en inox. L'étrémité du lien 15 saillante à l'extérieur est agencée de sorte à former une boucle formant moyen de préhension 12 et faciliter la prise en main par un opérateur de sorte à pouvoir facilement exercer un effort de traction sur ce câble, et donc indirectement sur le matelas 9 pour sont retrait de l'IFA 5.

Dans une configuration altenrative, voire éventuellement complémentaire, le lien 15, au lieu de traverser l'insert 14 peut être disposé dans l'évidement 94, entre l'insert 14 et le matelas thermique 9.

En d'autres termes, le lien 15 est dans ce cas agencé pour se prolonger de façon continue entre le matelas thermiques 9 et l'insert 14 accolés de sorte à faire saillie extérieurement par rapport aux matelas 9, le moyen de préhension 12 étant formé par une extrémité de ce lien 15.

Dans une telle configuration, et de la même façon qu'en traversant l'insert 14, le lien 15 est également fixé à la surface inférieure 14B de l'insert 14 ou, le cas échéant, à une chape 16 (non illustrée sur cette figure 3) et son extrémité est saillante à l'extérieur et agencée de sorte à former une boucle.

Alternativement, moyen de fixation amovible 11 présente un prolongement continue, entre le matelas thermiques 9 et l'insert 14, de la bande ashésive auto-agrippante qui est collée sur (ou solidaire de) la surface inférieure 14B de l'insert 14, de sorte à faire saillie par rapport aux matelas 9, le moyen de préhension 12 étant formé par une extrémité du moyen de fixation 11. Cette configuration est relativement similaire au quatrième mode de réalisation décrit ci-après en référence à la figure 5.

Ce second mode de réalisation est avantageux par rapport à la première solution, notamment en ce qu'il permet de supprimer le système de maintien du couvercle isolant ce qui permet de faciliter la pose du matelas thermique 9 et de réduire les coûts.

Les figures 4A et 4B illustrent des vues en coupe schématique d'un dispositif de fixation 10 selon un troisième mode de réalisation.

Ce troisième mode de réalisation est particulièrement adapté pour être situé à n'importe quel endroit de l'étendue du matelas thermique 9, et pas nécessairement sur un bord 90 de celui-ci.

Le dispositif de fixation 10 comprend, de la même façon que dans les deux premiers modes de réalisation, un moyen de fixation 11 composé :
- d'une première partie 11A sous forme d'une bande adhésive auto-agrippante collée sur la structure fixe interne 5 et présentant un tapissage de crochets ou boucles; et
- d'une deuxième partie 11B également sous forme d'une bande adhésive auto-agrippante, complémentaire de la première partie 11A, c'est-à-dire qu'elles coopèrent l'une avec l'autre de façon amovible et présente un tapissage de boucles ou crochets, respectivement.

Le dispositif de fixation 10 comprend un lien 15 traversant le matelas 9, relié au moyen de fixation amovible 11 du côté de de la structure fixe interne 5, en regard avec elle de sorte à ce que la deuxième partie 11B portée par le matelas 9 soit en contact et coopère de façon amovible avec la première partie 11A complémentaire, cette dernière étant collée sur l'ISF 5.

Le lien 15 est saillant par rapport au matelas 9 du côté extérieur, opposé à l'IFS 5, c'est-à-dire saillant par rapport à la face externe 93 du matelas 9. L'extrémité du lien 15 saillant extérieurement forme un moyen de préhension 12 pour un opérateur.

En particulier, la deuxième partie 11B de la bande adhésive auto-agrippante est collée par son adhésif sur une chape 16, laquelle est solidarisée par exemple à la face interne 92 du matelas 9. De préférence, la chape 16 est collée ou soudée à ladite face interne 92 du matelas 9. Cette chape 16 est ici métallique mais elle peut également être formé d'un matériau dfférent, tel qu'un tissu.

Le lien 15 traversant le matelas de protection thermique 9 est relié à la chape 16. Ce lien 15 est un câble en inox. Ce lien forme une boucle traversant le matelas de protection thermique 9 sur toute son épaisseur. Ce lien 15 est solidarisée à la chape 16 d'une part et au feuillard métallique sur la face externe 93 du matelas 9 d'autre part, où elle est saillante.

La fixation du lien 15 au niveau de la face interne 92 - ici par l'intermédiaire de la chape 16 - du matelas 9 permet d'assurer le retrait de la couverture thermique 9 lors de la maintenance.

Par ailleurs, la fixation du lien 15 au niveau de la face externe 93 - ici par un point de soudure - du matelas de protection thermique 9 permet d'assurer le bon maintien du matelas 9 sur l'IFS 5, ceci en particulier lorsque la chape 16 n'est pas collée ou soudée au matelas 9.

Pour limiter d'éventuelles frictons entre la fixation du lien 15 à la chape 16, ladite chape 16 présente, sensiblement en son centre, une partie centrale 16A sensiblement bombée et bordée lateralemement d'ailes latérales 16B.

La partie centrale 16A, du fait qu'elle est bombée en particulier du côté du matelas thermique 9, permet de définir un espace avec l'IFS 5 en position assemblée de sorte que la fixation du lien 15 sur la chape 16, par exemple une épaisseur du câble la traversant ou un point de soudure, puisse être logée dans cet espace sans être au contact de l'IFS 5.

Les ailes latérales 16B de la chape 16 sont quant à elles agencées de sorte à recevoir la deuxième partie 11B de la bande adhésive auto-agrippante qui est fixée dessus par collage grâce à son adhésif, ceci pour venir, en position assemblée, au contact et en appui plan contre la première partie 11A de la bande ashésive auto-agrippante collée sur l'IFS 5.

L'extrémité du lien 15 saillante à l'extérieur est également agencée de sorte à former une boucle et faciliter la prise en main par un opérateur afin de pouvoir facilement exercer un effort de traction sur ce câble 15.

L'avantage de ce mode de réalisation par rapport au deux premiers est qu'il n'est pas nécessaire de disposer le dispositif de fixation au travers d'un orifice 91 mais simplement au travers d'un passage seulement dimensionné pour le passage du lien 15 et non de la surface d'accroche du moyen de fixation amovible, en particulier des première et deuxième parties 11A, 11B.

De cette manière, la protection thermique est conservée de façon optimale est il n'y a pas besoin d'autres moyens pour assurer une isolation thermique du fait de l'évidement 94, tel couvercle isolant 17 avec une broche de fixation 18 ou un insert 14.

En d'autre termes, ce troisième mode de réalisation permet de conserver l'intégritée de la protection thermique sans perte locale d'isolation tout en réduisant le coût par l'absence d'un couvercle isolant 17 ou d'un insert 14.

Par ailleurs, la boucle du lien 15 formant moyen de préhension 12 permet de tirer directement sur la bande auto-aggripante et évite l'endommagement de la protection thermique 9.

La figure 5 illustre une vue en coupe schématique d'un dispositif de fixation 10 selon un quatrième mode de réalisation.

Ce quatrième mode de réalisation est particulièrement adapté pour être situé à la jonction de deux matelas thermiques 9, entre deux bords bords 90 de ceux-ci.

Le dispositif de fixation 10 comprend, de la même façon que dans les modes de réalisation précédents, un moyen de fixation 11 composé :
- d'une première partie 11A sous forme d'une bande adhésive auto-agrippante collée sur la structure fixe interne 5 et présentant un tapissage de crochets ou boucles; et
- d'une deuxième partie 11B également sous forme d'une bande adhésive auto-agrippante, complémentaire de la première partie 11A, c'est-à-dire qu'elles coopèrent l'une avec l'autre de façon amovible et présente un tapissage de boucles ou crochets, respectivement.

La deuxième partie 11B est collée sur la face interne 92 du matelas 9 en regard de la première partie 11A coopérant avec elle.

Le moyen de fixation amovible 11 est agencé pour se prolonger de façon continue entre deux matelas de protection thermiques 9 accolés de sorte à faire saillie par rapport aux matelas 9, le moyen de préhension 12 étant formé par une extrémité du moyen de fixation 11.

En d'autres termes, dans une telle configuration, le moyen de fixation 11 est disposé entre l'IFS 5 et le matelas thermique 9 et se prolonge de façon continue dans la jonction de deux matelas de protection thermique pour venir en saillie à l'extérieur.

Plus précisément, et de façon préférée, seule la deuxième partie 11B solidaire du matelas thermique se prolonge de façon continue entre deux matelas de protection thermique 9 accolés de sorte à faire saillie par rapport aux matelas 9, la première partie 11A étant intégralement solidaire de l'IFS 5.

De préférence encore, dans une telle configuration, la jonction entre deux matelas thermiques 9 est configurée de sorte que les bords 90 de ces deux matelas coopéèrent ensemble de façon complémentaire en se superposant.

Une telle configuration nécessite que le moyen de préhension 12, composé d'une partie au moins du moyen de fixation, soit résistante au feu.

La partie formant le prolongement du moyen de fixation est ici dans le prolongement du scratch et ne comporte pas de tappissage de crochets ou boucles de sorte à limiter les frictons dans la jonction entre les deux matelas thermiques 9.

Un tel dispositif de fixation 10 offre de nombreux avantages comme ceux de garantir une efficacité thermique du fait que les singularités liées aux fixations traversantes sont supprimées. Sa simplicité et son prix sont également des avatages importants de ce mode de réalisation.

Par ailleurs, dans le cadre de la maintenance, une telle solution permet un montage et un démontage rapide et facile. Lors du montage, il peut être prévu une protection des bande auto-agrippante, par exemple de type tissus de verre, pour éviter que les scratchs ou la partie auto-aggripante des bandes ne se collent entre eux dans une mauvaise position. Dans ce cas, une fois le matelas thermique 9 positioné, la protection peut être retirée.

L'invention est décrite dans ce qui précède à titre d'exemple. Il est entendu que l'homme du métier est à même de réaliser différentes variantes de réalisation de l'invention sans pour autant sortir du cadre de l'invention, telle que définie par les revendications ci-jointes.

## Revendications

1. Ensemble comprenant une structure fixe interne (5) d'une nacelle (3) d'un ensemble propulsif (1) d'aéronef, au moins un dispositif de fixation (10) et une protection thermique comportant au moins un matelas de protection thermique (9), la protection thermique étant fixée à la structure fixe interne (5) par l'au moins un dispositif de fixation (10), le dispositif de fixation (10) comprenant au moins un moyen de fixation amovible (11) de l'au moins un matelas de protection thermique (9) à la structure fixe interne (5) disposé entre le matelas de protection thermique (9) et ladite structure fixe interne (5), le dispositif de fixation (10) étant **caractérisé en ce qu'**il comporte au moins un moyen de préhension (12) lié au moyen de fixation amovible (11) et agencé pour être saillant par rapport au matelas de protection thermique (9) du côté opposé à la structure fixe interne (5), le moyen de fixation amovible (11) étant destiné à être désolidarisé de la structure fixe interne (5) par une force de traction exercée sur le moyen de préhension (12).

2. Ensemble selon la revendication 1, **caractérisé en ce que** le moyen de fixation amovible (11) comporte une première partie (11A) fixée à la structure fixe interne (5) et une deuxième partie (11B) reliée au moyen de préhension (12), les première et deuxième parties (11A, 11B) coopérant l'une avec l'autre de façon amovible.

3. Ensemble selon la revendication 1 ou 2, **caractérisé en ce que** le moyen de fixation amovible (11) est une bande adhésive auto-agrippante, de préférence un moyen de fixation mécanique par crochets et boucles, par exemple textiles ou métalliques.

4. Ensemble selon l'une quelconque des revendications précédentes, **caractérisé en ce qu'**il comporte deux matelas de protection thermique (9) et **en ce que** le dispositif de fixation (10) est disposé entre les deux matelas de protection thermique (9) de sorte à prendre en sandwich des bords (90) desdits matelas de protection thermique (9), ou traverse un orifice (91) d'un matelas de protection thermique (9) de sorte à prendre en sandwich des bords (90') de cet orifice (91).

5. Ensemble selon la revendication 4, **caractérisé en ce que** le dispositif de fixation (10) assure la fixation d'une structure intermédiaire (13) supportant le moyen de préhension (12).

6. Ensemble selon la revendication 4, **caractérisé en ce que** le dispositif de fixation (10) comporte un insert (14) de protection thermique complémentaire prenant en sandwich lesdits bords (90, 90'), le dispositif de fixation (10) comprenant un lien (15) traversant l'insert (14), relié au moyen de fixation amovible d'un côté de la structure fixe interne, et saillant par rapport à l'insert du côté opposé.

7. Ensemble selon l'une quelconque des revendications 1 à 3, **caractérisé en ce que** le dispositif de fixation (10) comprend un lien (15) traversant le matelas de protection thermique (9), relié au moyen de fixation amovible (11) du côté de la structure fixe interne, et étant saillant par rapport au matelas de protection thermique (9) du côté opposé.

8. Ensemble selon la revendication 7, **caractérisé en ce que** le lien (15) traversant est relié à une chape (16) solidarisée au matelas de protection thermique (9) du côté de la structure fixe interne (5), le moyen de fixation amovible (11) étant fixé sur ladite chape (16).

9. Ensemble selon la revendication 7, dans lequel le lien (15) forme une boucle formant le moyen de préhension (12).

10. Ensemble selon l'une quelconque des revendications 1 à 3, **caractérisé en ce qu'**il comporte deux matelas de protection thermique (9) et **en ce que** le moyen de fixation amovible (11) se prolonge de façon continue entre les deux matelas de protection thermique (9) accolés de sorte à faire saillie par rapport aux matelas de protection thermique (9), le moyen de préhension (12) étant formé par une extrémité du moyen de fixation amovible (11).

## Patentansprüche

1. Anordnung, die eine innere feste Struktur (5) einer Gondel (3) einer Antriebseinheit (1) eine Flugzeugs, mindestens eine Befestigungsvorrichtung (10) und einen Hitzeschutz, der mindestens eine Hitzeschutzmatte (9) aufweist, umfasst, wobei der Hitzeschutz durch die mindestens eine Befestigungsvorrichtung (10) an der inneren festen Struktur (5) befestigt ist; die Befestigungsvorrichtung (10) mindestens ein lösbares Befestigungselement (11) der mindestens einen Hitzeschutzmatte (9) an der inneren festen Struktur (5) umfasst, das zwischen Hitzeschutzmatte (9) und der inneren festen Struktur (5) angeordnet ist, wobei die Befestigungsvorrichtung (10) **dadurch gekennzeichnet ist, dass** sie mindestens ein mit dem lösbaren Befestigungselement (11) verbundenes Greifelement (12) aufweist, das so angeordnet ist, dass es von der mindestens einen Hitzeschutzmatte (9) auf einer der inneren festen Struktur (5) gegenüberliegenden Seite vorsteht, wobei das lösbare Befestigungselement (11) dazu bestimmt ist, durch eine auf das Greifelement (12) ausgeübte Zugkraft von der inneren festen Struktur (5) gelöst zu werden.

2. Anordnung nach Anspruch 1, **dadurch gekennzeichnet, dass** das lösbare Befestigungselement (11) einen ersten Abschnitt (11A), der an der inneren festen Struktur (5) befestigt ist, und einen zweiten Abschnitt (11B) aufweist, der mit dem Greifelement (12) verbunden ist, wobei der erste Abschnitt und der zweite Abschnitt (11A, 11B) lösbar miteinander zusammenwirken.

3. Anordnung nach Anspruch 1 oder 2, **dadurch gekennzeichnet, dass** das lösbare Befestigungselement (11) ein selbsthaftendes Klebeband ist, vorzugsweise ein mechanisches Befestigungselement durch Haken und Schlaufen, zum Beispiel Textil oder Metall.

4. Anordnung nach einem der vorhergehenden Ansprüche, **dadurch gekennzeichnet, dass** sie zwei Hitzeschutzmatten (9) aufweist, und dadurch, dass die Befestigungsvorrichtung (10) derart zwischen den beiden Hitzeschutzmatten (9) angeordnet ist, dass sie die Ränder (90) der Hitzeschutzmatten (9) sandwichartig in Eingriff nimmt, oder derart durch eine Öffnung (91) einer Hitzeschutzmatte (9) verläuft, dass sie die Ränder (90') dieser Öffnung (91) sandwichartig in Eingriff nimmt.

5. Anordnung nach Anspruch 4, **dadurch gekennzeichnet, dass** die Befestigungsvorrichtung (10) das Befestigen einer Zwischenstruktur (13) gewährleistet, die das Greifelement (12) trägt.

6. Anordnung nach Anspruch 4, **dadurch gekennzeichnet, dass** die Befestigungsvorrichtung (10) eine komplementäre Hitzeschutzeinlage (14) aufweist, die die Ränder (90, 90') sandwichartig in Eingriff nimmt, wobei die Befestigungsvorrichtung (10) ein Verbindungsglied (15) umfasst, das durch die Einlage (14) verläuft, mit dem lösbaren Befestigungselement auf einer Seite der inneren festen Struktur verbunden ist und in Bezug auf die Einlage von einer gegenüberliegenden Seite hervorsteht.

7. Anordnung nach einem der Ansprüche 1 bis 3, **dadurch gekennzeichnet, dass** die Befestigungsvorrichtung (10) ein Verbindungsglied (15) umfasst, das durch die Hitzeschutzmatte (9) verläuft, mit dem lösbaren Befestigungselement (11) auf der Seite der inneren festen Struktur verbunden ist und in Bezug auf die Hitzeschutzmatte (9) von der gegenüberliegenden Seite hervorsteht.

8. Anordnung nach Anspruch 7, **dadurch gekennzeichnet, dass** das durchlaufende Verbindungsglied (15) mit einem Gabelkopf (16) verbunden ist, der an der Hitzeschutzmatte (9) auf der Seite der inneren festen Struktur (5) angebracht ist, wobei das lösbare Befestigungselement (11) an dem Gabelkopf (16) befestigt ist.

9. Anordnung nach Anspruch 7, wobei das Verbindungsglied (15) eine Schlinge bildet, die das Greifelement (12) bildet.

10. Anordnung nach einem der Ansprüche 1 bis 3, **dadurch gekennzeichnet, dass** sie zwei Hitzeschutzmatten (9) aufweist, und dadurch, dass das lösbare Befestigungselement (11) sich kontinuierlich zwischen zwei miteinander verbundenen Hitzeschutzmatten (9) erstreckt, um in Bezug auf die Hitzeschutzmatten (9) vorzustehen, wobei das Greifelement (12) durch ein Ende des lösbaren Befestigungselements (11) gebildet wird.

## Claims

1. An Assembly comprising an inner fixed structure (5) of a nacelle (3) of an aircraft propulsion unit (1), at least one fastening device (10) and a heat shield including at least one heat-shield mat (9), the heat shield being fastened to the inner fixed structure (5) by the at least one fastening device (10), the fastening device (10) comprising at least one removable means (11) for fastening the at least one heat-shield mat (9) to the inner fixed structure (5) disposed between the heat-shield mat (9) and said inner fixed structure (5), the fastening device (10) being **characterized in that** it includes at least one gripping means (12) connected to the removable fastening means (11) and arranged so as to project from the heat-shield mat (9) on the side opposite to the inner fixed structure (5), the removable fastening means (11) being intended to be detached from the inner fixed structure (5) by a pulling force exerted on the gripping means (12).

2. The assembly according to claim 1, **characterized in that** the removable fastening device (11) includes a first portion (11A) fastened to the inner fixed structure (5) and a second portion (11B) connected to the gripping means (12), the first and second portions (11A, 11B) cooperating with each other in a removable manner.

3. The assembly according to claim 1 or 2, **characterized in that** the removable fastening means (11) is a self-gripping adhesive tape, preferably a mechanical fastening means with hooks and loops, for example textile or metallic.

4. The assembly according to any one of the preceding claims, **characterized in that** it includes two heat-shield mats (9) and **in that** the fastening device (10) is disposed between the two heat-shield mats (9) so as to sandwich edges (90) of said heat-shield mats (9) or cross an orifice (91) of a heat-shield mat (9) so as to sandwich edges (90') of this orifice (91).

5. The assembly according to claim 4, **characterized in that** the fastening device (10) ensures fastening of an intermediate structure (13) supporting the gripping means (12).

6. The assembly according to claim 4, **characterized in that** the fastening device (10) includes a complementary heat-shield insert (14) sandwiching said edges (90, 90'), the fastening device (10) comprising a link (15) crossing the insert (14), connected to the removable fastening means on one side of the inner fixed structure, and projecting from the insert on the opposite side.

7. The assembly according to any one of claims 1 to 3, **characterized in that** the fastening device (10) comprises a link (15) crossing the heat-shield mat (9), connected to the removable fastening means (11) on the side of the inner fixed structure, and projecting from the heat-shield mat (9) on the opposite side.

8. The assembly according to claim 7, **characterized in that** the crossing link (15) is connected to a clevis (16) secured to the heat-shield mat (9) on the side of the inner fixed structure (5), the removable fastening means (11) being fastened on said clevis (16).

9. The assembly according to claim 7, wherein the link (15) forms a loop forming the gripping means (12).

10. The assembly according to any one of claims 1 to 3, **characterized in that** it includes two heat-shield mats (9) and **in that** the removable fastening means (11) extends between the two adjoining heat-shield mats (9) so as to project from the heat-shield mats (9), the gripping means (12) being formed by one end of the removable fastening means (11).
